# DEMANDE DE BREVET EUROPEEN

(11) **EP 3 943 444 A1**
(43) Date de publication de la demande: **26.01.2022**
(21) Numéro de dépôt: 21187138.9
(22) Date de dépôt: 22.07.2021
(51) Int. Cl.: C01B 3/04, C01B 32/40, C01F 17/235, C01B 13/02, C01F 17/13, C01F 17/241, C01G 25/00

(54) **PROCÉDÉ DE PRÉPARATION D'UN MATÉRIAU ACTIF SPÉCIFIQUE POUR LA PRODUCTION D'HYDROGÈNE OU DE MONOXYDE DE CARBONE VIA LA DISSOCIATION DE L'EAU OU DU DIOXYDE DE CARBONE**

(30) Priorité: 22.07.2020 FR 2007721
(71) Demandeur: Commissariat à l'énergie atomique et aux énergies alternatives, 75015 Paris (FR); Centre National de la Recherche Scientifique, 75794 Paris Cedex 16 (FR); UNIVERSITE DE MONTPELLIER, 34090 Montpellier (FR); Ecole Nationale Supérieure de Chimie de Montpellier, 34296 Montpellier Cedex 5 (FR)
(72) Inventeur: DELAHAYE, Thibaud, 30300 TRESQUES (FR); LETURCQ, Gilles, 84850 CAMARET SUR AIGUES (FR); PICART, Sébastien, 30400 VILLENEUVE LES AVIGNON (FR); AYRAL, André, 34670 SAINT BRES (FR); JULBE, Anne, 34000 MONTPELLIER (FR); ABANADES, Stéphane, 66120 FONT ROMEU (FR)
(74) Mandataire: Brevalex

(57) **Abrégé**

L'invention a trait à un procédé de préparation d'un matériau actif utile pour la production d'hydrogène *via* la dissociation d'eau ou de monoxyde de carbone *via* la dissociation du dioxyde de carbone, lequel matériau actif comprend des microsphères de cérine, ledit procédé comprenant les étapes suivantes :
a) une étape de mise en contact d'une solution aqueuse comprenant du cérium sous forme ionique et, lorsque la cérine à préparer est une cérine substituée, le ou les autres éléments métalliques sous forme ionique, avec une résine échangeuse d'ions, moyennant quoi le cérium et le ou les éventuels autres éléments métalliques s'échangent avec les ions mobiles de la résine ;
b) une étape de traitement thermique de ladite résine sous atmosphère oxydante pour former le matériau actif.

## Description

### DOMAINE TECHNIQUE

L'invention a trait à un procédé de préparation d'un matériau actif spécifique permettant une dissociation de l'eau en hydrogène ou du dioxyde de carbone en monoxyde de carbone, par exemple, par conversion thermochimique, plaçant ainsi cette invention dans le domaine de l'énergie.

L'énergie a toujours été un élément majeur dans le développement de l'humanité. Si pour les pays industrialisés, la demande en énergie, après avoir fortement augmenté, tend à se stabiliser voire à diminuer grâce notamment à une meilleure efficacité énergétique des systèmes employés, celle des pays en voie de développement est en plein essor. Par ailleurs, l'accroissement démographique concourt également à l'augmentation de la consommation énergétique globale. Ainsi, en considérant une évolution des besoins énergétiques à l'échelle mondiale de + de 2,5% par an, ces derniers auront doublé dans une trentaine d'années. Si jusqu'ici, pour satisfaire ces besoins, l'humanité a eu largement recours aux énergies fossiles (telles que le charbon, le gaz et le pétrole), l'épuisement de ces ressources mais aussi le réchauffement climatique lié pour partie à leur combustion et aux relâchements de gaz à effet de serre associés, imposent de trouver de nouvelles sources d'énergie. L'essor des énergies renouvelables contribue à cette transition vers un développement durable. Parmi les différentes options envisagées, celle consistant à convertir l'énergie solaire en chaleur moyennant l'emploi de concentrateurs capables de produire de très hautes températures (par exemple, plus de 1000°C) présente un fort potentiel. Afin de promouvoir son développement, il s'agit de convertir la chaleur produite en fonction de l'application visée et de l'utilisateur final. Outre la production d'électricité par voie solaire thermodynamique via l'emploi de turbines non sans intérêt mais de rendement faible (de 15 à 30%), la conversion et le stockage de cette chaleur en combustibles de synthèse (nommés également syngas) *via* des cycles thermochimiques offrent de nombreuses possibilités de valorisation mais aussi une grande flexibilité en termes d'utilisation et d'acheminement (par exemple, le stockage de l'énergie solaire se faisant sous forme de combustibles transportables).

Ainsi, la dissociation par fractionnement des molécules d'eau, H₂O, ou de dioxyde de carbone, CO₂, en combustibles de synthèse (respectivement, H₂ et CO, constituants de base pour la préparation de divers combustibles liquides de synthèse) *via* des cycles thermochimiques d'oxydoréduction en présence d'un matériau actif, généralement un oxyde, est une stratégie prometteuse pour convertir l'énergie solaire. Il est à noter que l'utilisation du dioxyde de carbone, CO₂, comme précurseur, permet de le convertir, comme susmentionné, en monoxyde de carbone, qui constitue plutôt une ressource à la différence du CO₂, qui est un gaz à effet de serre. Plus spécifiquement, au cours du cycle thermochimique, le matériau actif du type oxyde susmentionné est, dans un premier temps, réduit en générant de l'oxygène gazeux et formant ainsi un oxyde sous-stœchiométrique puis, dans un deuxième temps, le matériau actif sous forme d'oxyde sous-stœchiométrique est réoxydé en captant l'oxygène de l'eau ou du dioxyde de carbone et en générant concomitamment du H₂ ou du CO, l'énergie solaire concentrée étant utilisée comme source de chaleur à haute température pour réaliser au moins la réduction du matériau actif.

A titre d'exemple, lorsque le réactif est de l'eau, les réactions de réduction et d'oxydation susmentionnées peuvent être résumées par les réactions suivantes :

MₐOₒₓ → MₐO_{Réd} + (1/2)O₂

MₐO_{Réd} + H₂O → MₐOₒₓ + H₂

MₐOₒₓ symbolisant le matériau actif dans son état d'origine et MₐO_{réd} symbolisant le matériau actif à l'état réduit.

Si cette approche technique est séduisante, l'efficacité du processus thermochimique impliquant l'énergie solaire doit encore être améliorée pour conduire à une production de combustible économiquement viable et le matériau doit être intégré au réacteur thermochimique sous une forme appropriée pour les réactions solide-gaz.

Actuellement, la cérine de formule CeO₂ est considérée comme le matériau actif de référence des cycles redox thermochimiques. En effet, cet oxyde conserve sa structure fluorine cubique isotrope au cours des cycles thermiques sur une large plage de pressions partielles en oxygène et présente également une oxydation (sous la forme de CeO_{2-δ}) thermodynamiquement favorable. Cependant, cet oxyde souffre d'une température de réduction élevée et d'une faible amplitude de réduction. En variante, plusieurs oxydes mixtes dérivés de la cérine par substitution cationique ont été envisagés pour pallier ces limitations en augmentant l'activité redox et la stabilité à long terme. Pour ces oxydes, il est alors important d'assurer leur stabilité structurale lors des variations thermiques en limitant notamment les transformations de phase et en maintenant leur structure cubique isotrope. Cette condition structurale liée aux performances redox, et plus largement électrochimiques, peut être remplie par des taux de substitution accessibles dans la structure fluorine de la cérine en fonction de la nature du ou des élément(s) intégré(s). Ainsi, afin d'éviter toute transformation de phase, l'intégration d'un élément trivalent noté M (tel que Gd, Nd, Y, La, Pr) en substitution d'une partie du Ce tétravalent impose des teneurs telles que Ce₁₋ₓMₓO_{2-δ} avec 0 ≤ x ≤ 0,2. Pour des substitutions par des éléments tétravalents tels que Zr ou Hf, des taux de substitution plus importants peuvent être employés sans changement structural. Malgré tout, pour des taux trop élevés (≥ 30%), une deuxième limite apparaît avec la formation d'une phase secondaire additionnelle de type ZrO₂. Parmi ces substituants, certains influencent principalement les propriétés électrochimiques et la conductivité anionique (par les ions O²⁻), tandis que d'autres comme le zirconium ou le lanthane assurent principalement la stabilité thermique de l'oxyde formé. Par conséquent, pour allier performances électrochimiques et stabilité thermique, des doubles ou triples substitutions peuvent-être envisagées.

Outre les performances intrinsèques de la cérine éventuellement substituée en termes de réactions redox et de stabilité thermique, il est important de permettre leur interaction et leur forte réactivité avec les précurseurs gazeux (CO₂/H₂O vapeur) utilisés dans le procédé visé.

Pour ce faire, les propriétés physico-chimiques (telles que la morphologie, la distribution granulométrique, la surface spécifique, la nature et répartition de la porosité) extrinsèques des oxydes synthétisés peuvent être adaptées. Si des poudres nanométriques pourraient permettre d'assurer des surfaces spécifiques et donc des surfaces d'échange élevées, elles ne permettraient pas facilement le transfert/la diffusion de gaz à travers elles sans conduire à l'obstruction du réacteur dans lequel elles seraient intégrées. De plus, leur forte réactivité de surface alliée à leur distribution granulométrique serait également pénalisante vis-à-vis de la température de travail visée (1400°C) avec l'utilisation de concentrateurs solaires. En effet, un processus de frittage/consolidation par agrégation progressive serait activé et conduirait à un vieillissement prématuré du matériau actif, avec une baisse de sa surface active et donc de ses performances au cours des cycles successifs. Une alternative à l'utilisation de poudres nanométriques pourrait alors être l'emploi de monolithes poreux de cérine substituée ou non comme par exemple des mousses céramiques réticulées. Si la tenue dans le temps des performances versus le nombre de cycles thermochimiques réalisés serait ainsi assurée, la limitation viendrait de la densité de matériau engagée par volume de réacteur disponible, limitant grandement le rendement de production de gaz par unité de volume.

Aussi, les inventeurs se sont fixé comme objectif de proposer de fabriquer par un procédé innovant de fabrication de nouvelles formes de matériaux actifs qui puissent être utilisées pour la synthèse de combustibles du type H₂ et/ou CO *via* des cycles thermochimiques utilisant l'énergie solaire, ces matériaux actifs étant efficaces tant au niveau de la réactivité que du point de vue de la stabilité thermochimique à long terme, notamment en vue de leur intégration dans des récepteurs/réacteur solaires.

### EXPOSÉ DE L'INVENTION

Ainsi, l'invention a trait à un nouveau procédé de fabrication d'un matériau actif utile pour la production d'hydrogène *via* la dissociation d'eau ou de monoxyde de carbone *via* la dissociation du dioxyde de carbone, lequel matériau actif comprend (voire est constitué) des microsphères de cérine, ledit procédé comprenant les étapes suivantes :
a) une étape de mise en contact d'une solution aqueuse comprenant du cérium sous forme ionique et, lorsque la cérine à préparer est une cérine substituée, le ou les autres éléments métalliques sous forme ionique avec une résine échangeuse d'ions, généralement de cations, moyennant quoi le cérium et le ou les éventuels autres éléments métalliques s'échangent avec les ions mobiles de la résine, généralement des cations monovalents, tels que des ions oxinium ou préférentiellement, des ions ammonium ;
b) une étape de traitement thermique de ladite résine sous atmosphère oxydante pour former le matériau actif.

Par matériau actif, il s'entend, dans ce qui précède et ce qui suit, un matériau redox (en l'occurrence, la cérine), qui, dans un premier temps, est réduit, en libérant de l'oxygène, pour former un oxyde sous-stœchiométrique (en l'occurrence, une cérine sous-stœchiométrique présentant un déficit d'oxygène) puis, dans un deuxième temps, est réoxydé en captant de l'oxygène issu de l'eau ou du dioxyde de carbone, produisant ainsi concomitamment de l'hydrogène ou du monoxyde de carbone, cette étape de réoxydation pouvant être qualifiée de régénération.

Le procédé de l'invention utilise ainsi la capacité d'une résine échangeuse d'ions à fixer, de manière homogène et généralement congruente les éléments destinés à entrer dans la constitution de la cérine. La fixation se fait par échange entre les ions portés par des groupes spécifiques de la résine et le cérium et le ou lesdits éventuels autres élément(s) métallique(s) présents sous forme ionique dans la solution.

La composition de la cérine, lorsqu'elle est substituée, peut être parfaitement ajustée en jouant sur la composition de la solution utilisée dans l'étape a) et, plus particulièrement sur l'état de complexation des ions et la proportion des ions en solution.

La surface spécifique et la porosité (ou la fraction volumique des pores) ajustables et potentiellement stabilisables thermiquement peuvent être ajustées en fonction des compositions chimiques sélectionnées et des conditions de synthèse/conversion thermique.

Avant la mise en œuvre de l'étape a), le procédé de l'invention peut comprendre une étape de préparation de la solution aqueuse contenant le cérium sous forme ionique et, lorsque la cérine à préparer est une cérine substituée, le ou les autres éléments métalliques sous forme ionique.

Cette solution aqueuse peut être obtenue par dissolution d'au moins un sel de cérium et, le cas échéant, d'au moins un sel du ou des autres éléments métalliques dans une solution aqueuse, ce ou ces sels pouvant être des nitrates, étant entendu que le ou les sels sont introduits dans la solution aqueuse dans des quantités prédéterminées en fonction de la composition de la cérine que l'on souhaite obtenir.

Ces quantités prédéterminées peuvent correspondre aux proportions stœchiométriques de ces éléments dans la cérine finale visée. Il devra, de plus, être tenu compte des isothermes d'échange de ces éléments sur la résine choisie.

Comme mentionné ci-dessus, l'étape a) consiste à mettre en contact une solution aqueuse comprenant du cérium sous forme ionique et, lorsque la cérine à préparer est une cérine substituée, le ou les autres éléments métalliques sous forme ionique avec une résine échangeuse d'ions, moyennant quoi le cérium et le ou les éventuels autres éléments métalliques s'échangent avec les ions mobiles de la résine.

Classiquement, une résine échangeuse d'ions est un polymère tridimensionnel (par exemple, de la famille des polymères polyacryliques) comprenant des groupements ionisés ou ionisables, qui lui confère des propriétés d'échangeur d'ions.

Plus spécifiquement, une résine échangeuse d'ions appropriée est une résine échangeuse de cations, telle que, par exemple, une résine comprenant des groupes carboxylate portant des ions ammonium NH₄⁺, ces derniers étant aptes à s'échanger avec le cérium et le ou les éventuels autres élément(s) métallique(s) sous forme cationique.

Les résines utilisées se présentent, classiquement, sous forme de microsphères, cette forme étant conservée au cours du procédé de préparation et conférant, à l'issue du procédé, leur forme aux microsphères de cérine.

Les résines présentent également avantageusement une porosité contrôlée, par exemple, avec une homogénéité dans la taille de pores et dans la répartition des pores.

A titre d'exemples, les résines utilisées dans le cadre de l'invention peuvent être des résines résultant de la (co)polymérisation de l'acrylonitrile avec un agent de réticulation, notamment le divinylbenzène (DVB). Il faudra prévoir, après polymérisation, une étape d'hydrolyse des groupes -CN en groupes carboxyliques.

Des résines commerciales pouvant être utilisées pour la mise en œuvre du procédé de l'invention peuvent être les résines fournies par Rohm&Haas, telles que les résines IMAC HP 333.

La résine échangeuse de cations choisie peut être amenée à subir une ou plusieurs étapes de traitement avant passage de la solution de charge, parmi lesquelles on peut citer :
- une étape de calibrage, par voie humide, de sorte à isoler la fraction granulométrique désirée, par exemple, une fraction allant de 100 à 800 µm ;
- au moins une étape de lavage en mettant en œuvre un cycle de traitement acide et basique avec de l'acide nitrique et de l'ammoniaque suivie d'une étape de rinçage à l'eau déminéralisée ;
- une étape de séchage après l'étape de rinçage ;
- une étape de tri de forme, de sorte à éliminer les particules brisées ou non sphériques, cette étape pouvant être réalisée sur une table inclinée.

On précise que l'étape de lavage susmentionnée a pour but de nettoyer la résine de toute présence de résidus de synthèse et d'ions alcalins. Ainsi, la fixation d'un ion ammonium par réaction de neutralisation du proton des groupes carboxyliques par de l'ammoniaque permet un gonflement de la résine propice à un meilleur accès des pores à l'eau de lavage.

La résine, éventuellement traitée si besoin est, peut, lorsqu'elle est utilisée sous forme d'un lit, être ensuite avantageusement humidifiée généreusement, et placée dans une colonne pour former un lit de particules de résine destiné à recevoir la solution aqueuse.

L'étape de mise en contact de la solution sur la résine, consiste, en d'autres termes, en une imprégnation de la résine par la solution aqueuse, par exemple, *via* la circulation de la solution à travers le lit de résine.

Le pH de la solution aqueuse peut être fixé à une valeur prédéterminée, si cela est nécessaire pour obtenir un échange optimal avec la résine échangeuse d'ions.

La solution aqueuse comprend, classiquement, des quantités prédéterminées de cérium et du ou des éventuels autres éléments métalliques en fonction de la composition de cérine visée, ces quantités prédéterminées étant telles que définies ci-dessus.

Cette mise en contact (ou imprégnation) peut se dérouler selon différentes variantes.

Selon une première variante, elle peut consister à immerger la résine dans la solution aqueuse contenant le cérium et le ou les éventuels élément(s) métallique(s) sous forme ionique et à maintenir l'ensemble sous agitation.

Selon une deuxième variante, elle peut consister à laisser écouler, par percolation, à travers un lit de résine, la solution aqueuse et à récupérer un éluat.

Selon cette variante, la résine, lorsqu'il s'agit, par exemple, d'une résine comprenant des groupes carboxyliques, échange progressivement ses protons contre les cations de cérium ou du ou des éventuels éléments métalliques. Le pH de l'éluat diminue brusquement, lorsque débute l'échange avec la résine sous forme protonique (c'est-à-dire comprenant des groupes carboxyliques -COOH). Il remonte ensuite progressivement jusqu'à retrouver la valeur du pH de la charge d'entrée, ce qui signifie que l'échange est terminé et que la résine se trouve saturée en cérium et en le ou les éventuels autres éléments métalliques. On peut ainsi stopper le passage de la solution sur la résine. En d'autres termes, on procède au passage sur la résine de la solution de charge jusqu'à obtention d'un éluat présentant une concentration identique à celle de la solution de départ.

Quelle que soit la variante envisagée, l'étape de mise en contact peut s'accompagner d'une étape de recirculation de la solution aqueuse, c'est-à-dire que chaque volume de la solution est destiné à repasser une ou plusieurs fois sur la résine échangeuse d'ions.

Quelle que soit la variante envisagée, l'étape de mise en contact peut être réalisée à une température et/ou une pression prédéterminées, dès lors que cette température et/ou pression prédéterminées peuvent permettre un échange ionique optimale.

Après l'étape de mise en contact, le procédé de l'invention peut comprendre une étape de lavage de la résine avec de l'eau déminéralisée, notamment en vue d'éliminer l'excédent de cations métalliques non fixés sur la résine.

Enfin, après l'étape de mise en contact et l'éventuelle étape de lavage, le procédé peut comprendre une étape de séchage de la résine, par exemple, à température ambiante ou à une température aux environs de 100°C, par exemple à 105°C, de sorte à provoquer l'évaporation de l'eau présente dans les pores de la résine, cette étape de séchage pouvant être réalisée dans une étuve.

Selon l'invention, la résine ainsi complexée à l'issue de l'étape a) est ensuite amenée à subir une étape de traitement thermique de ladite résine sous atmosphère oxydante pour former la cérine.

Cette étape de traitement thermique consiste, classiquement, en une opération de calcination ou céramisation réalisée à une température destinée à éliminer le squelette organique de la résine, cette calcination pouvant se dérouler à une température pouvant aller de 500°C à 1000°C, dans des conditions oxydantes (par exemple, sous air) de sorte à former la cérine.

Cette étape de traitement thermique peut être réalisée dans un four, par exemple, un four tubulaire ou un four à chargement frontal. A l'issue de cette étape, il résulte ainsi la cérine souhaitée, celle-ci se présentant sous la forme de la résine utilisée (plus spécifiquement, des microsphères).

Après l'opération de céramisation, le traitement thermique peut être achevé par une opération de stabilisation à haute température, ce qui signifie, en d'autres termes, que le traitement thermique comprend sucessivement :
- une opération de céramisation telle que définie ci-dessus ;
- une opération de stabilisation à haute température.

Plus particulièrement, cette opération de stabilisation est destinée à stabiliser une microstructure et une morphologie dite « haute température » apte à résister aux cycles thermochimiques haute température, cette opération de stabilisation consistant, avantageusement, en un chauffage à une température allant de 1300°C à 1400°C. L'opération de céramisation et l'opération de stabilisation peuvent être combinées en un seul cycle thermique. Cette opération de stabilisation permet, notamment, d'éviter une densification des microsphères, lorsqu'elles sont utilisées en haute température, et une perte de coulabilité rendant ainsi difficile voire impossible les opérations de déchargement/rechargement en matériau actif, par exemple, d'un réacteur solaire.

Par exemple, ce cycle thermique peut comprendre successivement :
- une montée en température, par exemple, de 1°C/min, jusqu'à 800°C, la température de 800°C étant maintenue pendant 4 heures suivi d'un retour à la température ambiante ; et
- une montée en température, par exemple, de 5°C/min, jusqu'à 800°C suivie d'une montée en température, par exemple, de 1°C/min jusqu'à 1300°C ou 1400°C, cette température étant maintenue pendant 4 heures, avant un retour à la température ambiante.

Les matériaux actifs de l'invention obtenus conformément au procédé de l'invention sont particulièrement adaptés pour la production d'hydrogène ou de monoxyde de carbone par voie solaire, c'est-à-dire par captation/concentration d'énergie solaire pour atteindre la température nécessaire à au moins la réduction du matériau actif.

Les microsphères de cérine, de par leur morphologie sphérique, présentent une forte aptitude à l'écoulement et à un empilement compact, avec la possibilité notamment d'utiliser plusieurs classes monodisperses de tailles de microsphères pour remplir de manière optimale le dispositif ou réacteur, dans lequel la réaction de dissociation peut avoir lieu, sans limitation quant à son dimensionnement. Elles peuvent permettre ainsi de bénéficier d'une densité de réaction élevée.

De plus, ces microsphères permettent d'envisager leur intégration dans des dispositifs ou réacteurs solaires à particules et leur mise en œuvre dans des procédés selon deux modes de fonctionnement :
- un procédé mettant en œuvre un dispositif ou réacteur unique solaire de type à lit fixe, lit fluidisé, lit mobile utilisant le rayonnement solaire comme moyen de chauffage, dans lequel les deux étapes du cycle sont effectuées en alternance à deux températures distinctes (par exemple, sous gaz inerte, pour la réduction et sous CO₂ ou H₂O pour l'oxydation) ;
- un procédé mettant en oeuvre deux réacteurs distincts : un réacteur pour l'étape de réduction du matériau actif couplé à un autre réacteur pour l'étape de régénération du matériau actif avec transfert du matériau actif entre les deux étapes du cycle, le transfert d'un réacteur à un autre étant favorisé par la coulabilité des microsphères.

La mise en œuvre du cycle redox est ainsi facilitée grâce à l'utilisation de microsphères en cérine. En effet, ces technologies de réacteurs ne peuvent pas être envisagées avec des poudres commerciales classiques, qui s'agglomèrent facilement, réduisant la surface réactive et l'accessibilité à cette surface. La seule méthode de mise en œuvre en réacteur solaire est aujourd'hui limitée à l'utilisation de monolithes poreux (et plus exactement, de mousses céramiques réticulées) jouant également le rôle de récepteurs volumiques pour le rayonnement solaire. L'inconvénient est que ce type de structure poreuse doit présenter une bonne homogénéité en température assurée par une absorption volumique du rayonnement, ce qui nécessite une faible épaisseur optique et ainsi une faible opacité afin d'éviter les gradients thermiques. Cette caractéristique est en contradiction avec la nécessité de présenter en même temps une densité de matière élevée pour impliquer une quantité de matière suffisante dans les cycles redox, donc augmenter la production en H₂ ou CO et une porosité élevée pour favoriser les réactions solide/gaz.

Les microsphères de cérine peuvent être, plus particulièrement, des microsphères présentant un diamètre moyen externe d'au moins 1 µm et, plus spécifiquement, un diamètre moyen externe allant de 100 µm à 800 µm et, plus particulièrement allant de 400 µm à 800 µm. Ce diamètre moyen externe est déterminé par observation d'un ensemble de microsphères par microscopie optique (ou électronique à faible agrandissement) et analyse des images à l'aide d'un logiciel adéquat.

La cérine constitutive des microsphères peut être une cérine non substituée, c'est-à-dire répondant à la formule CeO₂, ou une cérine substituée, c'est-à-dire une cérine dont une partie du cérium est substituée par au moins un autre élément métallique, tel qu'un élément métallique trivalent, par exemple, choisi parmi Gd, Nd, Y, La, Pr ou tel qu'un élément tétravalent, par exemple, du zirconium ou du hafnium.

Plus spécifiquement, la cérine substituée peut répondre à la formule Ce₁₋ₓMₓO₂ avec 0 ≤ x ≤ 0,5 avec M représentant le ou les élément(s) métallique(s) substituant le cérium.

A titre d'exemple, des cérines spécifiques pouvant entrer dans la constitution des microsphères peuvent être des cérines de formule Ce_{0,8}Gd_{0,2}O₂ ou de formule Ce₁₋ₓZrₓO₂ avec 0 ≤ x ≤ 0,5.

Les microsphères de cérine présentent, avantageusement, une porosité ouverte ou dite interconnectée et, plus spécifiquement, une porosité dont le volume occupé par les pores dans chaque microsphère est supérieur à 33% volumique du volume total de la microsphère.

Comme mentionné ci-dessus, les matériaux actifs obtenus conformément au procédé de l'invention sont destinés à être utilisés pour la fabrication d'hydrogène *via* la dissociation de l'eau ou de monoxyde de carbone *via* la dissociation du dioxyde de carbone, par exemple, par voie solaire et, plus particulièrement, dans le cadre d'un procédé de fabrication, avantageusement, par voie solaire, d'hydrogène *via* la dissociation de l'eau ou de monoxyde de carbone *via* la dissociation du dioxyde de carbone comprenant au moins un cycle d'étapes suivantes :
a) une étape de réduction du matériau actif tel que défini ci-dessus par libération d'oxygène ;
b) une étape de régénération du matériau actif par captation d'oxygène provenant de la dissociation d'eau ou de dioxyde de carbone formant ainsi concomitamment de l'hydrogène ou du monoxyde de carbone, cette étape de régénération comprenant la mise en contact du matériau actif issu de l'étape a) avec de l'eau ou du dioxyde de carbone.

Les matériaux actifs obtenus conformément au procédé de l'invention peuvent être utilisés dans un dispositif pour la mise en œuvre du procédé de fabrication défini ci-dessus comprenant un matériau actif tel que défini ci-dessus.

Concernant le procédé de fabrication, il est précisé que celui-ci s'effectue, avantageusement, par voie solaire, c'est-à-dire que l'énergie nécessaire à l'étape de réduction et, éventuellement, l'étape de régénération provient de l'énergie solaire.

L'étape de réduction du matériau actif peut être effectuée, avantageusement, en présence d'un gaz inerte, tel que de l'argon ou de l'azote et à une température efficace pour obtenir cette réduction, cette température étant atteinte, lorsque le procédé s'effectue, par voie solaire, par la captation/concentration de l'énergie solaire. L'étape de réduction se manifeste par une libération d'oxygène.

L'étape de réduction peut être également réalisée à faible pression totale pour favoriser la libération de l'oxygène par diminution de sa pression partielle.

La fixation de cette température pourra aisément être déterminée par un homme du métier en procédant à des essais préalables pour déterminer celle-ci.

A l'issue de cette réaction, le matériau actif est à l'état réduit, la cérine constitutive de ce matériau se présentant ainsi sous forme d'une cérine sous-stœchiométrique ou autrement dit, une cérine déficitaire en oxygène.

L'étape de régénération du matériau actif consiste, plus spécifiquement, en la réoxydation du matériau actif réduit à l'étape précédente, cette régénération passant par la captation par le matériau actif à l'état réduit de l'oxygène de l'eau formant ainsi concomitamment de l'hydrogène ou par la captation par le matériau actif à l'état réduit de l'oxygène du dioxyde de carbone formant ainsi concomitamment du monoxyde de carbone.

L'étape de régénération est réalisée, avantageusement, par passage, de vapeurs d'eau ou de dioxyde de carbone, sur le matériau actif à l'état réduit. L'étape de régénération peut être réalisée, également, en présence d'un gaz inerte.

L'étape de régénération est réalisée, avantageusement, à une température efficace pour permettre la dissociation de l'eau ou du monoxyde de carbone.

La température de l'étape de régénération est, classiquement, inférieure à la température nécessaire pour l'étape de réduction du matériau actif.

En particulier, lorsque l'étape de réduction et l'étape de régénération sont réalisés dans un même réacteur, la température nécessaire à l'étape de régénération peut être atteinte, sans apport d'énergie externe (par exemple, d'énergie solaire, lorsque le procédé est réalisé par voie solaire), au cours du refroidissement du réacteur.

La température de l'étape de régénération pourra être également aisément déterminée par un homme du métier en procédant à des essais préalables pour déterminer cette température.

L'étape de réduction et l'étape de régénération peuvent être mises en œuvre dans un seul réacteur ou dans deux réacteurs distincts : un réacteur pour l'étape de réduction du matériau actif et un réacteur pour l'étape de régénération du matériau actif. Dans ce cas, le matériau actif issu de l'étape de réduction est transféré dans le réacteur pour la mise en œuvre de l'étape de régénération, le transfert étant d'autant plus efficace que le matériau actif présente une excellente coulabilité.

Plus spécifiquement, lorsque le procédé de fabrication est réalisé par voie solaire, le dispositif pour la mise en œuvre du procédé, peut comprendre, en outre :
- une entrée pour l'introduction du réactif gazeux (en l'occurrence, ici, de l'eau ou du dioxyde de carbone) ;
- une entrée pour l'introduction éventuelle d'un gaz vecteur (par exemple, un gaz inerte) du réactif gazeux ;
- un tube connecté aux entrées susmentionnées, dans lequel est placé un lit constitué du matériau actif conforme à l'invention (et plus spécifiquement, un lit fixe, un lit fluidisé ou un lit mobile) ;
- une sortie connectée au tube pour évacuer les produits gazeux formés lors de l'étape de réduction et l'étape de régénération définies plus haut ;
- un concentrateur de rayons solaires destiné à fournir l'énergie solaire nécessaire à la réaction se produisant au niveau du lit.

En outre, le dispositif peut comprendre une entrée pour l'introduction d'un gaz inerte pendant l'étape de réduction pour le transport de l'oxygène produit lors de l'étape de réduction du matériau actif ou facultativement un système de pompage en sortie pour abaisser la pression partielle en O₂.

D'autres caractéristiques et avantages de l'invention apparaîtront mieux à la lecture du complément de description qui suit, lequel se rapporte à des exemples de préparation de microsphères de cérine et leur utilisation comme matériaux actifs pour des réactions thermochimiques

Bien entendu, les exemples qui suivent ne sont donnés qu'à titre d'illustration de l'objet de l'invention et ne constituent en aucun cas une limitation de cet objet.

### BRÈVE DESCRIPTION DES DESSINS

La figure 1 illustre différentes photographies obtenues par microscopie électronique à balayage (MEB) pour les microsphères de cérine obtenues conformément à l'exemple 1.
La figure 2 illustre différentes photographies obtenues par microscopie électronique à balayage (MEB) pour les microsphères de cérine obtenues conformément à l'exemple 2.
La figure 3 illustre différentes photographies obtenues par microscopie électronique à balayage (MEB) pour les microsphères de cérine obtenues conformément à l'exemple 1.
La figure 4 est un schéma d'un dispositif conforme à l'invention et utilisé pour la mise en œuvre de l'exemple 4.
La figure 5 est un graphique illustrant l'évolution de la vitesse de production en O₂ et H₂ V (en NL.min⁻¹.g⁻¹) (respectivement, courbes a) et b)) et l'évolution de la température du pyromètre T_{pyro} et de la température du matériau Tₘₐₜ (en °C) (respectivement, courbes c) et d)) en fonction du temps t (en s).
La figure 6 est un graphique illustrant l'évolution de la vitesse de production en O₂ et H₂ V (en NL.min⁻¹.g⁻¹) (respectivement, courbes a) et b)) et l'évolution de la température du pyromètre T_{pyro} et de la température du matériau Tₘₐₜ (en °C) (respectivement, courbes c) et d)) en fonction du temps t (en s).

### EXPOSÉ DÉTAILLÉ DE MODES DE RÉALISATION PARTICULIERS

### EXEMPLE 1

Dans cet exemple, il est procédé à la préparation de microsphères en cérine de formule CeO₂.

Pour ce faire, une résine de type polyacrylique se présentant sous forme de microsphères et convertie sous forme ammonium est introduite dans une colonne et chargée par mise en contact avec une solution aqueuse comprenant des ions Ce³⁺. Cette solution de chargement est obtenue par dissolution en milieu aqueux de nitrate de cérium. Après chargement, la résine est rincée afin d'éliminer toute trace de cations non fixés puis est séchée 12 heures dans une étuve à 100°C.

Une fois séchée, la résine subit un premier traitement de céramisation avec une montée en température de 1°C/min jusqu'à 800°C et un palier de 4 heures à cette température puis un retour à la température ambiante par refroidissement naturel du four. Une calcination complémentaire à une température de 1400°C est ensuite réalisée avec une montée rapide à 5°/min jusqu'à 800°C suivie par une montée en température de 1°C/min jusqu'à 1400°C, un palier de 4 heures à cette température puis un retour à la température ambiante par refroidissement naturel du four.

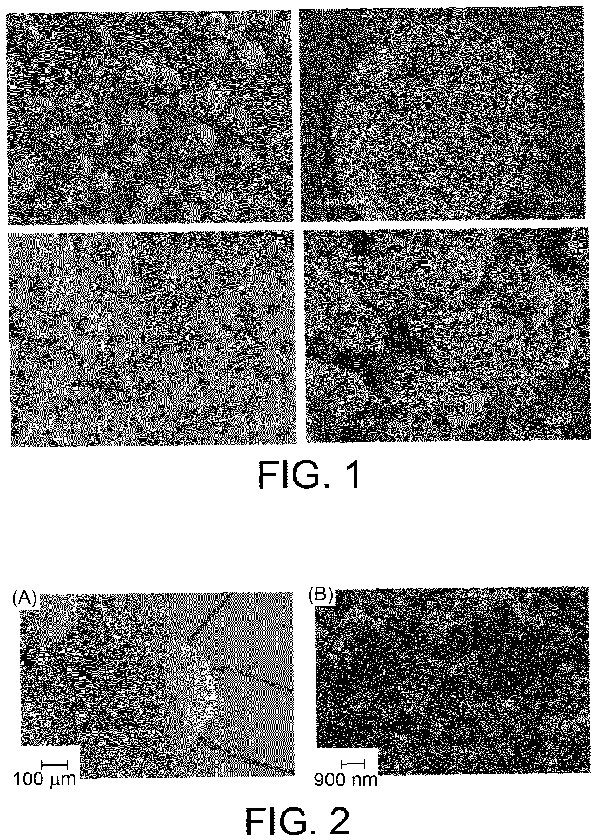

La caractérisation des microsphères synthétisées après traitement thermique final à 1400°C a été réalisée par microscopie électronique à balayage (MEB). Comme le montre la figure 1, les microsphères de cérine obtenues par ce procédé sont poreuses avec une porosité majoritairement ouverte permettant une bonne pénétration des gaz au travers des billes augmentant ainsi leur réactivité. Après calcination à 1400°C, la morphologie sphérique a été conservée. La surface spécifique a été déterminée par la méthode BET après traitement thermique à 1400°C et trouvée égale à 0,3 m²/g. Les microsphères obtenues présentent un diamètre allant de 250 µm et 500 µm, soit un diamètre moyen en nombre de l'ordre de 375 µm.

### EXEMPLE 2

Dans cet exemple, il est procédé à la préparation de microsphères en cérine gadoliniée de formule Ce_{0,8}Gd_{0,2}O₂.

Pour ce faire, une résine de type polyacrylique se présentant sous forme de microsphères et convertie sous forme ammonium est introduite dans une colonne et chargée par mise en contact avec une solution aqueuse comprenant des ions Ce³⁺ et Gd³⁺. Cette solution de chargement est obtenue par dissolution en milieu aqueux de nitrate de cérium et de nitrate de gadolinium en proportions stœchiométriques pour atteindre la composition finale visée. Après chargement, la résine est rincée afin d'éliminer toute trace de cations non fixés puis est séchée 12 heures dans une étuve à 100°C.

Une fois séchée, la résine subit un premier traitement de céramisation avec une montée en température de 1°C/min jusqu'à 800°C et un palier de 4 heures à cette température puis un retour à la température ambiante par refroidissement naturel du four. Une calcination complémentaire à une température de 1400°C est ensuite réalisée avec une montée rapide à 5°/min jusqu'à 800°C suivie par une montée en température de 1°C/min jusqu'à 1400°C, un palier de 4 heures à cette température puis un retour à la température ambiante par refroidissement naturel du four.

La caractérisation des microsphères synthétisées après traitement thermique final à 1400°C a été réalisée par microscopie électronique à balayage (MEB). Comme le montre la figure 2 (partie A avec une échelle de 100 µm et partie B avec une échelle de 900 nm), les microsphères de cérine obtenues par ce procédé sont poreuses avec une porosité majoritairement ouverte permettant une bonne pénétration des gaz au travers des billes augmentant ainsi leur réactivité. Après calcination à 1400°C, la morphologie sphérique a été conservée. La surface spécifique a été déterminée par la méthode BET après traitement thermique à 1400°C et trouvée égale à 0,5 m²/g.

Les microsphères obtenues présentent un diamètre allant de 250 µm et 500 µm, soit un diamètre moyen en nombre de l'ordre de 375 µm.

### EXEMPLE 3

Dans cet exemple, il est procédé à la préparation de microsphères en cérine zirconiée de formule Ce_{0,93}Zr_{0,07}O₂.

Pour ce faire, une résine de type polystyrène à groupements fonctionnels sulfoniques se présentant sous forme de microsphères et convertie sous forme ammonium est introduite dans une colonne et chargée par mise en contact avec une solution aqueuse nitrique comprenant des ions Ce³⁺ et Zr⁴⁺. Cette solution de chargement est obtenue par dissolution dans l'eau désionisée de carbonate de zirconyle et de nitrate de cérium. Après chargement, la résine est rincée afin d'éliminer toute trace de cations non fixés puis est séchée 12 heures à température ambiante.

Une fois séchée, la résine subit un premier traitement de céramisation avec une montée en température de 1°C/min jusqu'à 800°C et un palier de 4 heures à cette température puis un retour à la température ambiante par refroidissement naturel du four. Une calcination complémentaire à une température maximale de 1300°C est ensuite réalisée avec une montée rapide à 5°/min jusqu'à 800°C suivie par une montée en température de 1°C/min jusqu'à 1300°C, un palier de 4 heures à cette température puis un retour à la température ambiante par refroidissement naturel du four.

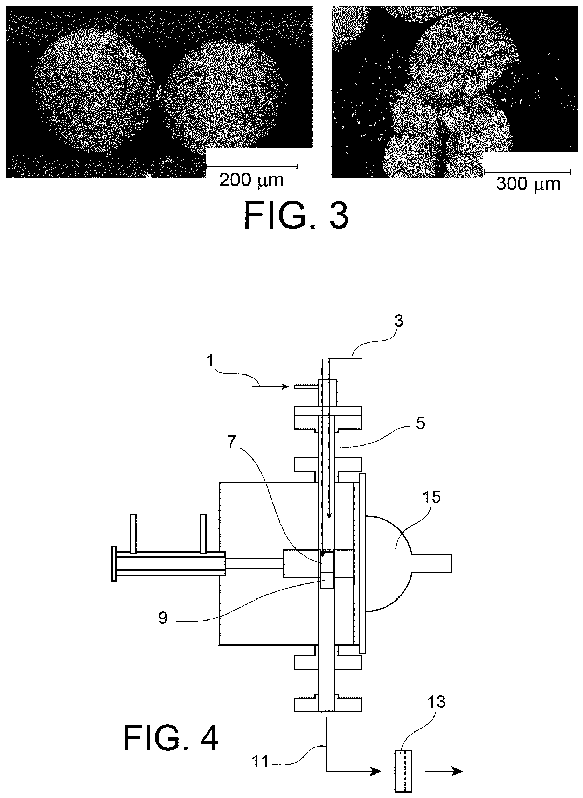

La caractérisation des microsphères synthétisées après traitement thermique final à 1400°C a été réalisée par microscopie électronique à balayage (MEB). Comme le montre la figure 3 (avec la partie droite présentant une microsphère fracturée pour observer la morphologie interne très poreuse), les microsphères de cérine obtenues par ce procédé sont très poreuses avec une porosité majoritairement ouverte permettant une bonne pénétration des gaz au travers des billes augmentant ainsi leur réactivité. Après calcination à 1400°C, la morphologie sphérique a été conservée. La surface spécifique a été déterminée par la méthode BET après traitement thermique à 1300°C et trouvée égale à 1,1 m²/g.

Les microsphères obtenues présentent un diamètre allant de 250 µm et 500 µm, soit un diamètre moyen en nombre de l'ordre de 375 µm.

### EXEMPLE 4

Dans cet exemple, la réactivité thermochimique des différentes microsphères préparées selon les exemples 1 à 3 (nommées ci-dessous « matériaux actifs ») a été étudiée par analyse thermogravimétrique (ATG).

Plus spécifiquement, les matériaux actifs ont été soumis à deux cycles par mise en contact de ceux-ci avec un gaz inerte (libérant du O₂ par réduction du matériau actif) puis avec du dioxyde de carbone (générant du CO par réoxydation du matériau actif), chaque cycle comprenant ainsi une étape de réduction de l'oxyde de cérium à 1400°C pendant 45 minutes sous balayage de gaz inerte (Ar) à pression atmosphérique produisant ainsi de l'oxygène et une étape d'oxydation sous Ar/CO₂ (50% CO₂) à 1050°C pendant 60 minutes, produisant ainsi du monoxyde de carbone.

Les résultats sont regroupés dans le tableau ci-dessous.

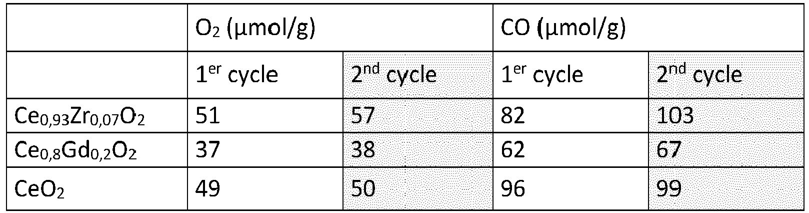

Même si les autres matériaux présentent de bons résultats, le matériau le plus performant concernant la stabilité, le rendement en carburant et la cinétique d'oxydation est ainsi la cérine pure, produisant environ 99 µmol/g CO lors du second cycle (correspondant à presque 2 fois la quantité de O₂). Cette production est similaire à celle obtenue à partir de poudre micronique de cérine (∼100 µmol/g de CO produit), indiquant ainsi que l'utilisation de microsphères poreuses en cérine permet de conserver la réactivité du matériau sans dégradation de ses performances. Toutefois, la densification du lit de poudre est évitée car l'empilement des microsphères reste intact et n'est pas altéré dans le temps, ce qui permet une conservation des propriétés morphologiques et microstructurales pour faciliter les transferts de matière (accès des gaz réactifs au volume du matériau), et assurer la stabilité des performances thermochimiques à plus long terme.

### EXEMPLE 5

Dans cet exemple, des expériences de cyclage en conditions représentatives réelles ont été réalisées dans un réacteur tubulaire chauffé par rayonnement solaire concentré, ce réacteur tubulaire étant représenté sur la figure 4 et comprenant les éléments suivants :
- une entrée 1 pour le milieu gazeux porteur pour la mise en œuvre de l'étape de réduction du matériau actif (en l'occurrence, ici, de l'argon) et la mise en œuvre de l'étape de régénération du matériau actif (en l'occurrence, ici, un mélange argon/H₂O) ;
- une entrée 3 pour l'introduction du réactif (en l'occurrence, ici, de l'eau liquide, qui se vaporise à l'intérieur du réacteur) ;
- un tube d'alumine 5 connecté aux entrées susmentionnées, dans lequel est placé un lit fixe 7 de microsphères de cérine préparées conformément à l'exemple 1, ce lit fixe reposant sur un support 9 constitué d'une couche poreuse en feutre en zircone ;
- une sortie 11 connectée au tube d'alumine pour évacuer les produits formés par dissociation de l'eau (à savoir, l'hydrogène lors de l'étape de régénération ou réoxydation du matériau actif et l'oxygène, lors de l'étape de réduction du matériau actif), cette sortie étant reliée à un filtre 13 et un analyseur de gaz (non représenté) ;
- un concentrateur de rayons solaires 15 destiné à fournir l'énergie solaire nécessaire à la réaction se produisant au niveau du lit fixe.

La vapeur d'eau est transportée par le milieu gazeux porteur et circule à travers le lit fixe de matériau réactif. Un thermocouple type B mesure directement la température à l'intérieur du lit. De plus, un pyromètre mesure également la température du tube sur la paroi externe directement exposée au rayonnement. Après élimination de l'excès d'eau en sortie dans un barboteur et un desséchant, le gaz de sortie est analysé en ligne à l'aide d'analyseurs de gaz spécifiques pour la mesure en continu des concentrations de O₂ (pendant la réduction du matériau actif) et H₂ (pendant la réoxydation ou régénération du matériau actif).

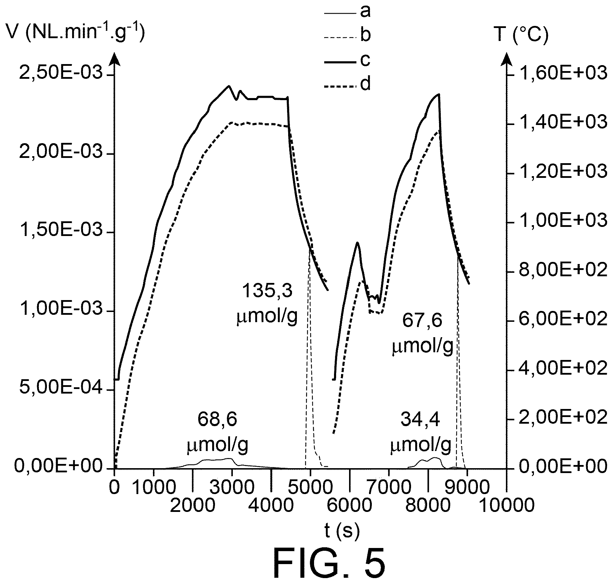

La figure 5 illustre deux cycles thermochimiques de dissociation de l'eau à partir des microsphères de cérine (m=23,03 g de CeO₂ pendant le premier cycle et m=12,41 g de CeO₂ pendant le second cycle) et, plus spécifiquement, l'évolution des vitesses de production en O₂ et H₂ V (en NL.min⁻¹.g⁻¹) (respectivement, courbes a) et b)) et l'évolution de la température du pyromètre et de la température du matériau T (en °C) (respectivement, courbes c) et d)) en fonction du temps t (en s).

Au vu de la figure susmentionnée, pendant le 1^{er} cycle, les microsphères ont été cyclées entre 1400°C (pour l'étape de réduction de la cérine) puis en-dessous de 1050°C (pour la régénération ou réoxydation de la cérine préalablement réduite) et ont produit environ 135,3 µmol/g H₂ (égal à environ 2 fois la quantité de O₂ produite). La réduction a été effectuée sous Ar pur (0,25 NL/min) et la réoxydation avec une injection d'eau (0,228 g/min + 0,25 NL/min Ar, fraction molaire H₂O : 53%). De l'oxygène O₂ est libéré pendant la phase de chauffage du matériau à partir d'environ 840°C (premières traces détectées) et est relâché en quantité plus importante à partir de 1000°C. Sa concentration augmente ensuite constamment jusqu'à atteindre un maximum lorsque la température maximale de réduction est atteinte et le palier maintenu (1400°C). L'injection de vapeur d'eau pendant le refroidissement libre du réacteur en dessous de 1050°C (sans apport d'énergie solaire) entraîne une augmentation instantanée de la concentration de H₂ atteignant rapidement un taux de production maximum peu de temps après l'injection (^{∼} 1 min) ; ensuite la concentration de H₂ diminue constamment pour devenir négligeable, indiquant la ré-oxydation complète du matériau.

Pendant le second cycle, la température a été augmentée jusqu'à seulement 1360°C et a ensuite été diminuée immédiatement, il en a résulté une plus faible quantité de O₂ produite, ce qui a entrainé également une diminution de la production de H₂ (67,6 µmol/g). Le pic de production de H₂ atteint environ 1,4 mL/min/g dans les deux cycles.

Enfin, il a été mené une expérience avec 4 cycles consécutifs réalisés avec une température de réduction du matériau actif de 1400°C.

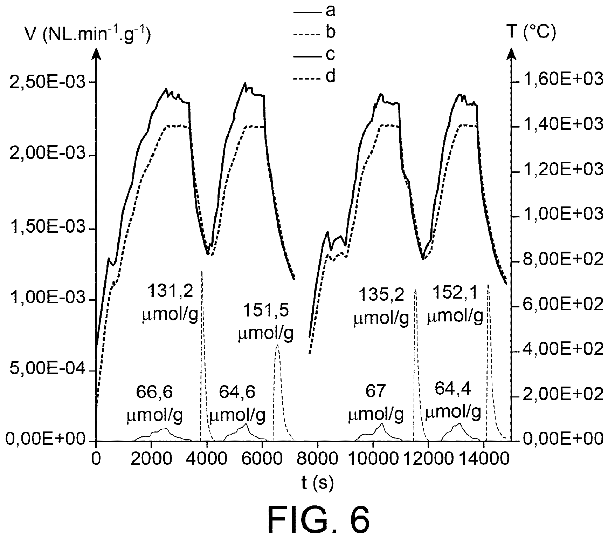

Les caractéristiques de ces cycles et les résultats obtenus sont illustrés sur la figure 6, qui représente l'évolution de la vitesse de production en O₂ et H₂ V (en NL.min⁻¹.g⁻¹) (respectivement, courbes a) et b)) et l'évolution de la température du pyromètre T_{pyro} et de la température du matériau Tₘₐₜ (en °C) (respectivement, courbes c) et d)) en fonction du temps t (en s).

Les quantités de O₂ émises dans chaque cycle sont stables (64,6-66,6 µmol/g). L'oxydation a été réalisée en-dessous de 1150°C (injection de vapeur d'eau au cours du refroidissement du réacteur) pour le deuxième cycle (et en dessous de 1050°C pour les autres cycles), ce qui a causé une diminution significative de la vitesse de production de H₂ (pic à 0,67 mL/min/g) comparé aux autres cycles (1,1-1,2 mL/min/g). Les rendements de production et les vitesses sont stables au cours des quatre cycles, ce qui confirme l'absence de désactivation ou de perte de performance pendant les cycles.

## Revendications

1. Procédé de préparation d'un matériau actif utile pour la production d'hydrogène *via* la dissociation d'eau ou de monoxyde de carbone *via* la dissociation du dioxyde de carbone, lequel matériau actif comprend des microsphères de cérine, ledit procédé comprenant les étapes suivantes :
a) une étape de mise en contact d'une solution aqueuse comprenant du cérium sous forme ionique et, lorsque la cérine à préparer est une cérine substituée, le ou les autres éléments métalliques sous forme ionique, avec une résine échangeuse d'ions, moyennant quoi le cérium et le ou les éventuels autres éléments métalliques s'échangent avec les ions mobiles de la résine ;
b) une étape de traitement thermique de ladite résine sous atmosphère oxydante pour former le matériau actif.

2. Procédé selon la revendication 1, dans lequel l'étape de traitement thermique consiste en une opération de calcination réalisée à une température destinée à éliminer le squelette organique de la résine.

3. Procédé selon la revendication 2, dans lequel l'opération de calcination est réalisée à une température allant de 500°C à 1000°C dans des conditions oxydantes.

4. Procédé selon la revendication 2 ou 3, dans lequel le traitement thermique comprend, en outre, après l'opération de calcination, une opération de stabilisation à haute température consistant en un chauffage à une température allant de 1300°C à 1400°C.

5. Procédé selon la revendication 4, dans lequel l'opération de céramisation et l'opération de stabilisation sont combinées en un seul cycle thermique.

6. Procédé selon l'une quelconque des revendications précédentes, dans lequel les microsphères de cérine sont des microsphères présentant un diamètre moyen externe allant de 100 µm à 800 µm.

7. Procédé selon l'une quelconque des revendications précédentes, dans lequel la cérine constitutive des microsphères est une cérine non substituée, c'est-à-dire répondant à la formule CeO₂.

8. Procédé selon l'une quelconque des revendications précédentes, dans lequel la cérine constitutive des microsphères est une cérine substituée, c'est-à-dire une cérine dont une partie du cérium est substituée par au moins un autre élément métallique.

9. Procédé selon la revendication 8, dans lequel l'autre élément métallique est un élément métallique trivalent choisi parmi Gd, Nd, Y, La, Pr ou un élément tétravalent, tel que du zirconium ou du hafnium.

10. Procédé selon l'une quelconque des revendications précédentes, dans lequel les microsphères de cérine présentent une porosité ouverte ou dite interconnectée.
